# FASCICULE DE BREVET EUROPEEN

(11) **EP 0 889 800 B1**
(45) Date de publication et mention de la délivrance du brevet: **22.08.2001**
(21) Numéro de dépôt: 97919475.0
(22) Date de dépôt: 03.04.1997
(51) Int. Cl.: B60N 2/42

(54) **Assise de siège à déformation contrôlée passive**
Sitzgestell mit kontrollierter passiver Verformung
Controlled passive deformation seat portion for a car seat

(30) Priorité: 05.04.1996 FR 9604320
(43) Date de publication de la demande: 13.01.1999
(73) Titulaire: RENAULT, 92109 Boulogne-Billancourt (FR)
(72) Inventeur: BELLOT, Dominique, F-91190 Gif-sur-Yvette (FR); LE GLAUNEC, Yann, F-78400 Chatou (FR); MECHELAERE, Arnaud, F-95800 Cergy-le-Haut (FR); WALFISH, Gilbert, F-77330 Ozoir-la-Ferrière (FR)
(86) Numéro de dépôt international: FR9700601
(87) Numéro de publication internationale: WO9737869

(56) Documents cités:
- EP-A- 0 264 016
- EP-A- 0 463 436
- EP-A- 0 515 204
- EP-A- 0 598 527
- WO-A-93/01950
- WO-A-95/09743
- DE-A- 3 631 881

## Description

L'invention concerne une assise de siège pour véhicule automobile. En cas de choc d'un véhicule, il est connu que le corps d'un occupant sanglé sur son siège se déplace relativement à la ceinture, en particulier par un glissement de son bassin le long de l'assise, sous la partie ventrale de ladite ceinture. Ce déplacement augmente les risques de lésions consécutives à une compression exagérée des segments corporels.
La publication EP-A-0515204 décrit un dispositif de contrôle des déplacements du siège lors d'une décélération importante.
La publication DE-A-3631881 décrit un dispositif de blocage du déplacement du passager vers l'avant couplé à un moyen de tension de la ceinture de sécurité.
Pour remédier à cet inconvénient, il a été proposé de modifier la structure de l'armature de l'assise par adjonction d'une traverse située à proximité de la partie antérieure de ladite armature, appelée ci-après barre d'antisoumarinage. Par sa forme élaborée, la barre d'antisoumarinage limite les déplacements exagérés vers l'avant du bassin de l'occupant du siège et, par voie de conséquence, préserve ledit occupant des lésions abdominales. Néanmoins, le bassin de l'occupant vient s'écraser, en cas de choc violent, sur ladite barre entraînant une pression au niveau des fesses pouvant provoquer des lésions.

L'assise du siège selon l'invention vise à remédier à ces inconvénients. A cet effet, l'invention concerne une assise de siège de véhicule automobile du type comportant une barre d'antisoumarinage disposée transversalement et fixée à ladite assise, caractérisée en ce que la barre d'antisoumarinage est guidée dans des rainures longitudinales autorisant un mouvement de ladite barre d'antisoumarinage lorsque une valeur déterminée des efforts est transmise à ladite barre d'antisoumarinage par l'occupant du siège.
Selon une autre caractéristique de l'invention, les moyens de guidage comportent deux biellettes fixées, symétriquement l'une par rapport à l'autre, aux extrémités de la barre d'antisoumarinage avec laquelle elles constituent un ensemble rigide, ledit ensemble rigide étant monté entre des flasques verticaux reliés entre eux par une traverse antérieure et une traverse postérieure pour former l'assise, le même ensemble rigide reposant par l'extrémité antérieure desdites biellettes sur des gorges disposées à l'avant des faces intérieures desdits flasques verticaux.

Selon une autre caractéristique de l'invention, chaque gorge est constituée respectivement par l'espace délimité entre la face intérieure du flasque et un collet disposé sur la traverse antérieure.

Selon une autre caractéristique de l'invention, les moyens de guidage comportent des tenons fixés respectivement à l'extrémité postérieure des biellettes et montés respectivement dans des rainures longitudinales pratiquées dans l'épaisseur des flasques correspondants.

Selon une autre caractéristique de l'invention, les moyens de guidage comportent des tenons fixés respectivement aux flasques et montés respectivement dans des rainures longitudinales pratiquées dans l'épaisseur des biellettes correspondantes.

Selon une autre caractéristique de l'invention, les moyens de limitation des efforts sont constitués par les rainures longitudinales et les tenons, la largeur des rainures longitudinales étant inférieure à l'épaisseur des tenons.

Selon une autre caractéristique de l'invention, la largeur des rainures longitudinales est variable le long desdites rainures longitudinales.

L'assise de siège selon l'invention permet de contrôler la trajectoire de la barre d'antisoumarinage et surtout l'effort qu'elle transmet à l'occupant du siège tout au long du choc. On peut ainsi déterminer a priori l'effort maximal que subira l'occupant et donc, en particulier, le maintenir en deçà des limites physiologiques acceptables. On peut également faire varier cet effort maximal d'un type de véhicule à l'autre au prix d'une adaptation très simple. Ceci permettra, par exemple, de diminuer l'effort maximal subit dans le cas d'une utilisation de l'assise selon l'invention à l'intérieur d'un véhicule dont la caisse possède de bonnes propriétés d'absorption de l'énergie.

D'autres caractéristiques et avantages apparaîtront à la lecture de la description d'un exemple de dispositif selon l'invention, en référence aux dessins dans lesquels :
- la figure 1 est une vue en perspective de la structure d'un siège muni d'une assise selon l'invention en position de repos,
- la figure 2 est une vue de la figure 1 après déplacement de la barre d'antisoumarinage,
- la figure 3 est une vue en coupe longitudinale de l'assise selon l'invention sur laquelle la position de repos est représentée en trait plein et la position après déplacement de la barre d'antisoumarinage en trait interrompu,
- la figure 3A est une vue en coupe selon la ligne IIIA-IIIA de la figure 3,
- la figure 3B est une vue en coupe selon la ligne IIIB-IIIB de la figure 3,
- la figure 3C est une vue en coupe selon la ligne IIIC-IIIC de la figure 3,
- la figure 4 est une vue schématique représentant l'occupant assis dans le siège muni de l'assise selon l'invention, avant le choc,
- la figure 5 est une vue de la figure 4 après le choc.

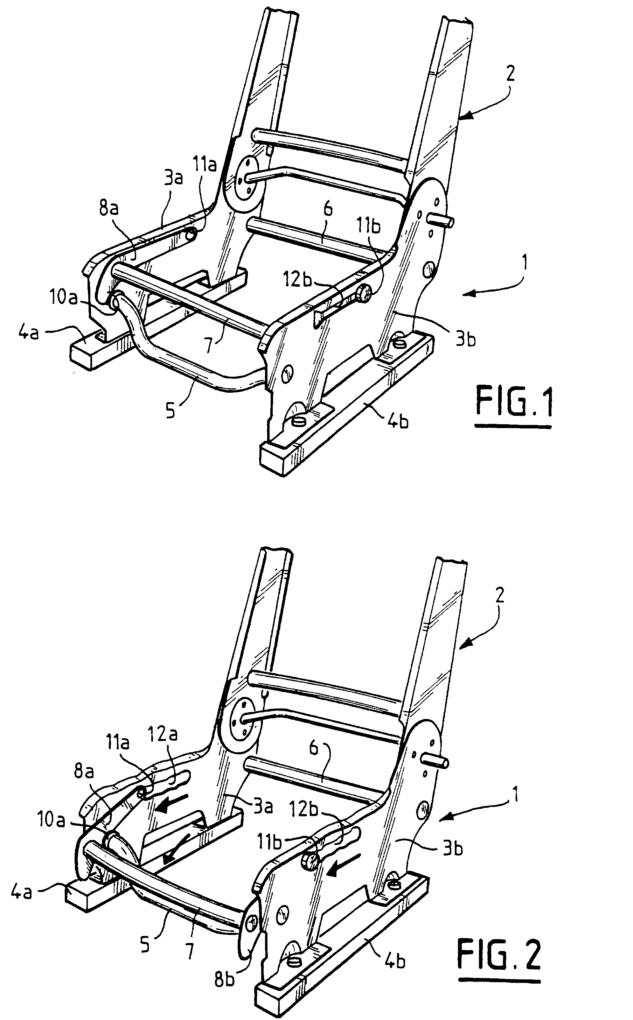

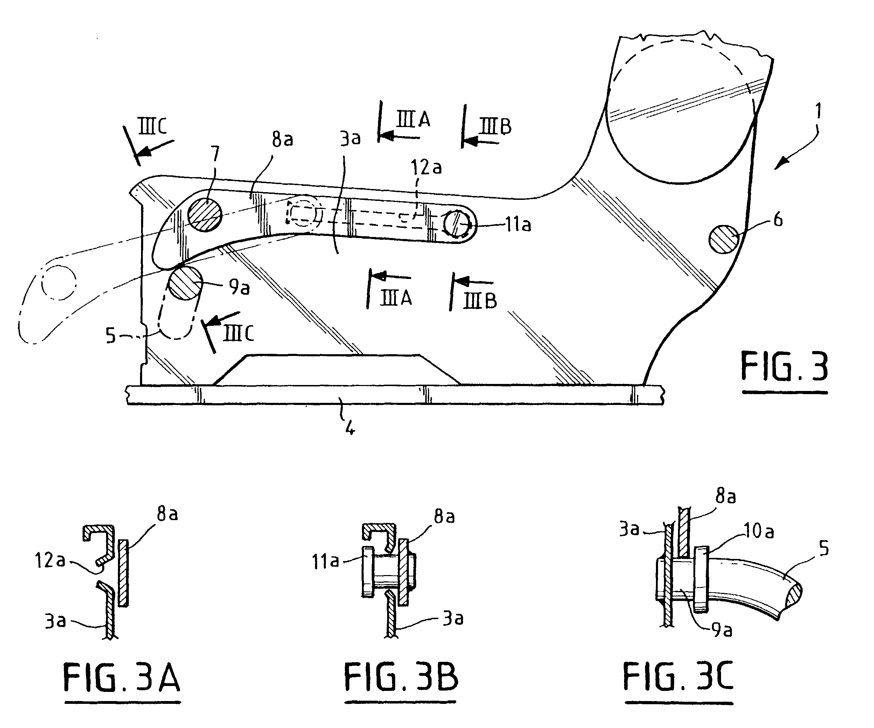

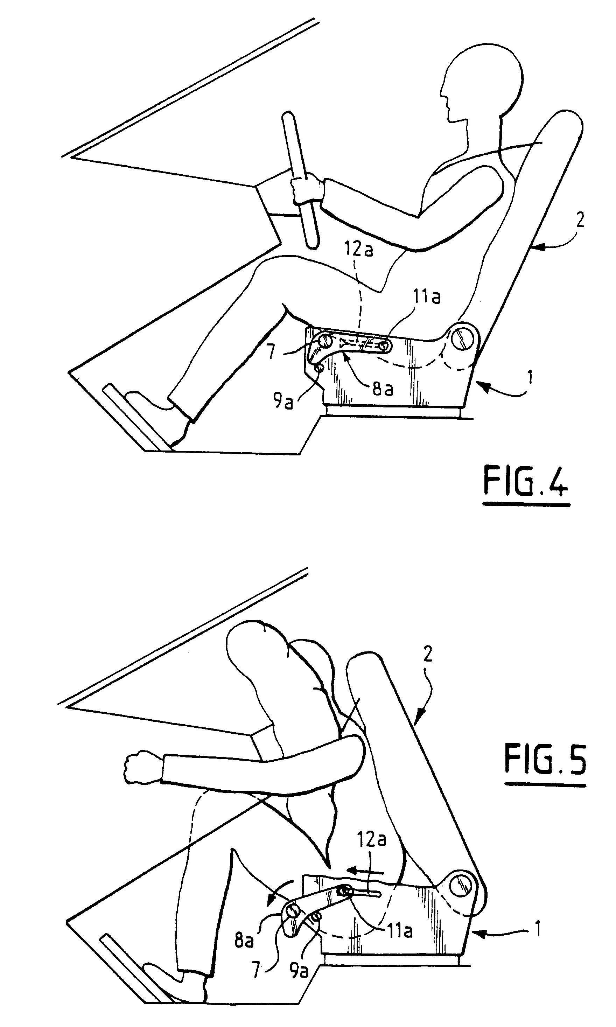

L'assise 1 selon une première variante de l'invention est représentée dans sa position de repos sur la figure 1 où elle est munie d'un dossier 2. L'assise 1 est constituée de deux flasques verticaux 3a,3b montés respectivement sur des glissières 4a,4b elles-mêmes fixées sur le plancher d'un véhicule. Les deux flasques verticaux 3a,3b sont reliés entre eux par une traverse antérieure 5 disposée à l'avant et en bas de l'assise 1 et par une traverse postérieure 6 disposée à l'arrière de ladite assise 1. Une barre d'antisoumarinage 7 est disposée transversalement à l'assise 1, au-dessus de la traverse antérieure 5 et est fixée respectivement à chacune de ses extrémités, à des biellettes 8a,8b elles-mêmes disposées le long des faces intérieures des flasques verticaux 3a,3b. Les deux biellettes 8a,8b sont parallèles entre elles et forment avec la barre d'antisoumarinage 7 un ensemble rigide. Chacune des biellettes 8a,8b repose, par son extrémité avant, dans une gorge 9a,9b assurant le guidage latéral desdites biellettes 8a,8b. Selon une variante préférentielle représentée sur les figures 3 et 3C, chaque gorge 9a,9b est constituée respectivement par l'espace délimité entre la face intérieure du flasque 3a,3b et un collet 10a,10b disposé sur la traverse antérieure 5. Chacune des biellettes 8a,8b est munie à son extrémité arrière, d'un tenon 11a,11b monté dans une rainure longitudinale 12a,12b pratiquée dans l'épaisseur du flasque 3a,3b correspondant. En cas de choc, les fesses de l'occupant viennent appuyer, sous l'effet de l'inertie du corps, sur la barre d'antisoumarinage 7 qui est alors entraînée vers l'avant comme il est représenté sur les figures 4 et 5. La trajectoire des biellettes 8a,8b et donc de la barre d'antisoumarinage 7 est déterminée à la fois par la position verticale des gorges 9a,9b dans lesquelles glissent lesdites biellettes 8a,8b et par la disposition et la forme des rainures longitudinales 12a,12b dans lesquelles coulissent les tenons 11a,11b. On fera en sorte d'obtenir, pour la barre d'antisoumarinage 7, une trajectoire sensiblement en arc de cercle de courbure orientée vers le bas. Une telle trajectoire peut être obtenue par de nombreuses configurations parmi lesquelles celle combinant des rainures longitudinales 12a,12b rectilignes horizontales avec des gorges 9a,9b situées en contre bas à l'avant desdites rainures 12a,12b est représentée sur les figures. Le mouvement vers l'avant de la barre d'antisoumarinage 7 est limité par des moyens de dissipation d'énergie bien connus de l'homme du métier et qui seront déterminés de manière à limiter l'effort exercé par ladite barre 7 sur l'occupant du siège à des valeurs comprises dans une fourchette allant de 300 à 900 daN. De tels moyens pourront constituer par exemple en un vérin disposé le long des rainures 12a,12b et reliant les biellettes 8a,8b aux flans 3a,3b de l'assise 1. Selon une variante particulièrement avantageuse représentée sur les figures, en particulier sur la figure 3B, la dissipation de l'énergie est assurée par les rainures longitudinales 12a,12b dont la largeur est inférieure à l'épaisseur des tenons 11a,11b .Le fonctionnement en cas de choc est celui représenté sur les figures 4 et 5. La figure 4 représente l'occupant assis dans le siège, les fesses situées à la limite entre l'assise 1 et le dossier 2, la barre d'antisoumarinage 7 située sous les cuisses et les tenons 11a, 11b disposées en fond arrière des rainures longitudinales 12a,12b. Lors du choc, l'occupant est entraîné vers l'avant par son inertie et vient appuyer avec ses fesses sur la barre d'antisoumarinage 7 qui transmet l'effort aux deux tenons 11a,11b par l'intermédiaire des biellettes 8a,8b. La largeur des rainures longitudinales 12a,12b et l'épaisseur des flasques verticaux 3a,3b sont déterminées de manière à ce que, pour un effort donné, compris généralement entre 300 et 900daN, les lèvres desdites rainures longitudinales 12a,12b s'écartent, déformées par leur tenon respectif 11a,11b entraînés vers l'avant par la barre d'antisoumarinage 7, comme il est schématisé sur les figures 2, 3A et 3C. Le guidage des biellettes 8a,8b dans leurs gorges respectives 9a,9b et le guidage des tenons 11a,11b dans leurs rainures respectives 12a,12b déterminent une trajectoire de la barre d'antisoumarinage 7 vers le bas et vers l'avant représentée sur les figures 2 et 5. Ceci se traduit chez l'occupant du siège par une plongée du bassin vers l'avant et vers le bas comme le montre la figure 5. De la même manière qu'il est possible de programmer l'effort maximal admissible, comme on l'a déjà vu ci-dessus, il est également possible de programmer un effort de retenue exercé par la barre d'antisoumarinage 7 variable, par exemple, en faisant varier la largeur des rainures longitudinales 12a,12b de l'avant vers l'arrière de l'assise 1.

Bien entendu, l'invention n'est nullement limitée au mode de réalisation décrit et illustré qui n'a été donné qu'à titre d'exemple. En particulier, une assise dans laquelle les rainures seraient pratiquées sur les biellettes et les tenons solidaires des flasques verticaux ne sortirait pas du cadre de l'invention.

## Revendications

1. Assise (1) de siège de véhicule automobile du type comportant une barre d'antisoumarinage (7) disposée transversalement et fixée à ladite assise, caractérisée en ce que la barre d'antisoumarinage (7) est guidée dans des rainures longitudinales (12a, 12b) autorisant un mouvement de ladite barre d'antisoumarinage (7) lorsque une valeur déterminée des efforts est transmise à ladite barre d'antisoumarinage (7) par l'occupant du siège.

2. Assise (1) de siège de véhicule automobile selon la revendication 1, caractérisé en ce que les rainures (12a, 12b) forment des moyens de limitation des efforts transmis par la barre d'antisoumarinage (7) à l'occupant du siège.

3. Assise (1) de siège de véhicule automobile selon la revendication 2 caractérisée en ce que des moyens de guidage comportent deux biellettes (8a,8b) fixées, symétriquement l'une par rapport à l'autre, aux extrémités de la barre d'antisoumarinage (7) avec laquelle elles constituent un ensemble rigide, ledit ensemble rigide étant monté entre des flasques verticaux (3a,3b) reliés entre eux par une traverse antérieure (5) et une traverse postérieure (6) pour former l'assise (1), le même ensemble rigide reposant par l'extrémité antérieure desdites biellettes (8a,8b) sur des gorges (9a,9b) disposées à l'avant des faces intérieures desdits flasques verticaux (3a,3b).

4. Assise (1) de siège de véhicule automobile selon la revendication 3 caractérisée en ce que chaque gorge (9a,9b) est constituée respectivement par l'espace délimité entre la face intérieure du flasque (3a,3b) et un collet (10a,10b) disposé sur la traverse antérieure (5).

5. Assise (1) de siège de véhicule automobile selon l'une quelconque des revendications 3 à 4 caractérisée en ce que les moyens de guidage comportent des tenons (11a, 11b) fixés respectivement à l'extrémité postérieure des biellettes (8a,8b) et montés respectivement dans des rainures longitudinales (12a, 12b) pratiquées dans l'épaisseur des flasques (3a,3b) correspondants.

6. Assise (1) de siège de véhicule automobile selon l'une quelconque des revendications 3 à 4 caractérisée en ce que les moyens de guidage comportent des tenons (11a, 11b) fixés respectivement aux flasques (3a,3b) et montés respectivement dans des rainures longitudinales (12a,12b) pratiquées dans l'épaisseur des biellettes (8a,8b) correspondantes.

7. Assise (1) de siège de véhicule automobile selon l'une quelconque des revendications 5 ou 6 caractérisée en ce que les moyens de limitation des efforts sont constitués par les rainures longitudinales (12a,12b) et les tenons (11a,11b), la largeur des rainures longitudinales (12a,12b) étant inférieure à l'épaisseur des tenons (11a, 11b).

8. Assise (1) de siège de véhicule automobile selon la revendication précédente caractérisée en ce que la largeur des rainures longitudinales (12a,12b) est variable le long desdites rainures longitudinales (12a,12b).

## Patentansprüche

1. Sitzfläche (1) eines Kraftfahrzeugsitzes von der Art, welche eine das Durchtauchen verhindernde Stange (7) umfaßt, die in Querrichtung angeordnet und an der Sitzfläche befestigt ist, dadurch gekennzeichnet, daß die das Durchtauchen verhindernde Stange (7) in Längsrinnen (12a, 12b) geführt wird, die eine Bewegung dieser das Durchtauchen verhindernden Stange (7) ermöglichen, wenn von dem Insassen, der den Sitz einnimmt, ein bestimmter Wert von Belastungskräften auf diese das Durchtauchen verhindernde Stange (7) übertragen wird.

2. Sitzfläche (1) eines Kraftfahrzeugsitzes nach Anspruch 1, dadurch gekennzeichnet, daß die Rinnen (12a, 12b) Mittel zur Begrenzung der Belastungskräfte bilden, die von der das Durchtauchen verhindernden Stange (7) auf den den Sitz einnehmenden Insassen übertragenen werden.

3. Sitzfläche (1) eines Kraftfahrzeugsitzes nach Anspruch 2, dadurch gekennzeichnet, daß die Führungsmittel zwei Arme (8a, 8b) umfassen, die symmetrisch zueinander an den Endender das Durchtauchen verhindernden Stange (7) befestigt sind, mit der sie eine starre Baueinheit bilden, wobei diese starre Baueinheit zwischen vertikalen Seitenstücken (3a, 3b) montiert ist, die untereinander durch einen vorderen Querträger (5) und einen hinteren Querträger (6) verbunden sind, um die Sitzfläche (1) zu bilden, wobei dieselbe starre Baueinheit mit dem vorderen Ende der Arme (8a, 8b) auf Rillen (9a, 9b) ruht, die am vorderen Teil der Innenflächen dieser vertikalen Seitenstücke (3a, 3b) angeordnet sind.

4. Sitzfläche (1) eines Kraftfahrzeugsitzes nach Anspruch 3, dadurch gekennzeichnet, daß jede Rille (9a, 9b) jeweils von dem Raum gebildet wird, der zwischen der Innenfläche des Seitenstücks (3a, 3b) und einem auf dem vorderen Querträger (5) angeordneten Kragen (10a, 10b) abgegrenzt wird.

5. Sitzfläche (1) eines Kraftfahrzeugsitzes nach einem der Ansprüche 3 bis 4, dadurch gekennzeichnet, daß die Führungsmittel Zapfen (11a, 11b) umfassen, die jeweils am hinteren Ende der Arme (8a, 8b) befestigt sind und jeweils in Längsrinnen (12a, 12b) montiert sind, die in der Dicke der entsprechenden Seitenstücke (3a, 3b) vorgesehen sind.

6. Sitzfläche (1) eines Kraftfahrzeugsitzes nach einem der Ansprüche 3 bis 4, dadurch gekennzeichnet, daß die Führungsmittel Zapfen (11a, 11b) umfassen, die jeweils an den Seitenstücken (3a, 3b) befestigt sind und jeweils in Längsrinnen (12a, 12b) montiert sind, die in der Dicke der entsprechenden Arme (8a, 8b) vorgesehen sind.

7. Sitzfläche (1) eines Kraftfahrzeugsitzes nach einem der Ansprüche 5 oder 6, dadurch gekennzeichnet, daß die Mittel zur Begrenzung der Belastungskräfte von den Längsrinnen (12a, 12b) und den Zapfen (11a, 11b) gebildet werden, wobei die Breite der Längsrinnen (12a, 12b) geringer ist als die Dicke der Zapfen (11a, 11b).

8. Sitzfläche (1) eines Kraftfahrzeugsitzes nach dem vorhergehenden Anspruch, dadurch gekennzeichnet, daß die Breite der Längsrinnen (12a, 12b) entlang dieser Längsrinnen (12a, 12b) veränderlich ist.

## Claims

1. Seat squab (1) of an automotive vehicle seat of the type comprising an anti-submarining bar (7) arranged transversely and fixed to said seat squab,
characterised in that the anti-submarining bar (7) is guided in longitudinal grooves (12a, 12b) allowing movement of said anti-submarining bar (7) when a specific stress value is transmitted to said anti-submarining bar (7) by the occupant of the seat.

2. Seat squab (1) of an automotive vehicle seat according to claim 1,
characterised in that the grooves (12a, 12b) form means for limiting the stresses transmitted by the anti-submarining bar (7) to the occupant of the seat.

3. Seat squab (1) of an automotive vehicle according to claim 2, characterised in that the guide means comprise two connecting rods (8a, 8b) fixed symmetrically with respect to one another to the extremities of the anti-submarining bar (7) together with which they constitute a rigid assembly, said rigid assembly being mounted between vertical flanges (3a, 3b) connected together by an anterior cross-member (5) and a posterior cross-member (6) to form the seat (1), the same rigid assembly resting by the anterior extremity of said connecting rods (8a, 8b) on recesses (9a, 9b) arranged in front of the interior faces of said vertical flanges (3a, 3b).

4. Seat squab (1) of an automotive vehicle according to claim 3, characterised in that each recess (9a, 9b) is constituted respectively by the space delimited between the interior face of the flange (3a, 3b) and a collar (10a, 10b) arranged on the anterior cross-member (5).

5. Seat squab (1) of an automotive vehicle according to any one of claims 3 to 4
characterised in that the guide means comprise pegs (11a, 11b) fixed respectively to the posterior extremity of the connecting rods (8a, 8b) and mounted respectively in longitudinal grooves (12a, 12b) formed in the thickness of the corresponding flanges (3a, 3b).

6. Seat squab (1) of an automotive vehicle according to any one of claims3 to 4,
characterised in that the guide means comprise pegs (11a, 11b) fixed respectively to the flanges (3a, 3b) and mounted respectively in longitudinal grooves (12a, 12b) formed in the thickness of the corresponding connecting rods (8a, 8b).

7. Seat squab (1) of an automotive vehicle according to any one of claims 5 or 6,
characterised in that the means for limiting stress are constituted by longitudinal grooves (12a, 12b) and the pegs (11a, 11b), the width of the longitudinal grooves (12a, 12b) being less than the thickness of the pegs (11a, 11b).

8. Seat squab (1) of an automotive vehicle according to the preceding claim,
characterised in that the width of the longitudinal grooves (12a, 12b) is variable along said longitudinal grooves (12a, 12b).
